# EUROPEAN PATENT SPECIFICATION

(11) **EP 2 391 204 B1**
(45) Date of publication and mention of the grant of the patent: **20.03.2013**
(21) Application number: 10703085.0
(22) Date of filing: 08.01.2010
(51) Int. Cl.: A01K 5/02, A01K 15/02

(54) **ANIMAL EXERCISE AND FEEDING APPARATUS**
TIERÜBUNGS- UND FÜTTERVORRICHTUNG
APPAREIL D'EXERCICE ET D'ALIMENTATION POUR ANIMAL

(30) Priority: 08.01.2009 GB 0900227; 13.08.2009 GB 0914150
(43) Date of publication of application: 07.12.2011
(73) Proprietor: Pet Technology Store Limited, Guernsey GY7 9AL (GB)
(72) Inventor: CHAMBERLAIN, David, Guernsey GY7 9AL (GB); CHAMBERLAIN, Helen, Guernsey GY7 9AL (GB); SMITH, Nicholas, Andrew, James, St Sampson Guernsey GY2 4SW (GB)
(74) Representative: Walker, Neville Daniel Alan
(86) International application number: PCT/GB2010/000023
(87) International publication number: WO 2010/079333

(56) References cited:
- US-A- 5 483 923
- US-A- 5 934 223
- US-A1- 2008 011 243
- US-B1- 6 651 591

## Description

### Field of Invention

The present invention relates to an animal exercise and feeding apparatus.

### Background of Invention

Pets require a degree of commitment from an owner. Occasionally that commitment becomes a problem. An occasion such as this might be when the owner intends to be away from the pet for an extended period of time, returning after a normal mealtime for a pet; if the owner is delayed returning to the pet; or if the owner has to go on holiday. Typically therefore, a pet is often left at home for a period of a few hours or perhaps up to a day. Leaving a pet at home has limitations: pets may become sluggish or bored. This is particularly the case with felines, which are natural predators.

Also animals may be unlikely to ration the food left for them and may finish all the food left for them after just a few hours.

An object of the present invention arose in order to provide a means of regulating the provision of food to an animal when there is no human supervision as well as to provide a degree of entertainment and exercise to the animal or pet.

A number of systems exist which are intended to address the problem of feeding pets, by for example, providing a timing arrangement which automatically dispenses food at predetermined intervals, so that a pet does not become hungry. Some of these systems are discussed below.

### Prior Art

US Patent Application US 5 349 925 A1 (ZERATO) discloses a feeder for the presentation of food products for animals. The feeder includes a storage bin for containing animal food with a lidded top and a pressure plate linked to the top. When an animal stepped upon the pressure plate, the lid opens revealing the interior of the bin.

US granted Patent US 7 124 707 B1 (CLARKE) discloses an apparatus for the provision of food to a first animal. The apparatus includes a container for receipt of the food and a transmitter that is attached to the first animal and a receiver that is operatively attached to the apparatus. The transmitter emits a signal continuously or a signal only when it is proximate to the apparatus. The apparatus receives and responds to the signal to allow access to the food in the container when the signal is present. When the signal is not received by the apparatus, access to the food in the container is denied.

US granted Patent US 7 395 782 B1 (LINDSAY) discloses a system and method for providing access to animal food utilising identification tags on domestic animals, generally attached to a collar. The identification tag generates a signal that is detected by a receiver mounted on an enclosed food container. When the receiver detects a pre-selected acceptable signal from an animal, it activates a motor that causes a movable portion of the container to move to an open position. If the signal is no longer detected by the receiver, it activates the motor to move the movable portion of the container to a closed position. If the receiver detects a signal from an identification tag that is not one of the pre-selected signals, it activates the motor to move the movable portion of the container to a closed position.

Another device for automatically training animal behaviour is described in US Patent Application US-A1-2003/0154930 (MADDOX) which describes a system that includes a collar and a reward dispenser. The system discriminates between desirable and undesirable behaviour and encourages desirable behaviour by way of a dispensing a reward, thereby reinforcing such behaviour.

Other examples of automated animal feeding systems are described in US Patent Application US-A1-2005/0217591 (TURNER), US Patent Application US-A1-2005/0284382 (STANCHEV), US Patent Application US-A1-2005/0061252 (MEEKS), US Patent US-B1-6 044 795 (MATSUURA), UK Patent Application GB 2 454 658 (FRIEDMAN), US Patent Application US-A1-2006/0249088 (EU).

Whilst all the above mentioned devices provide a way of dispensing food to the pet or animal, there is limited interaction and in some instances the animal or pet may return at will to the device and thereby risk gaining weight.

An object of the present invention is to provide and improve the process of dispensing food to animals, and in particular to provide a means of regulating the provision of food to an animal when there is no human supervision, with the aim of ensuring that pets or animals receive food in a healthy and beneficial manner.

A further object of the invention is to provide an exercise apparatus for animals, particularly pets and more particularly felines.

### Summary of Invention

According to a first aspect of the invention there is provided an animal exercise and feeding apparatus including: a projection device arranged to project an image to be chased, under control of a random controller, and a dispenser, which is operative to dispense the feed to an authorised animal upon receipt of a command signal, which is derived from a sensor, that senses the position of an animal relative to the projected image.

Ideally the projection device includes a light source, such as a laser light emitting diode (LED), which scans an outline of an object to be chased and this might be the profile of a mouse or a similar sized animal.

Ideally the projector operates under control of a random controller, which can be programmed so that an image is projected to a defined space or region, for example within a square meter of floor area or a larger area, where there are no obstacles or impediments to the animal playing.

The motion or activity of a pet, which is typically a feline, is detected by way of a detector, such as a pixellated infra-red (PIR) detector, which is capable of determining the amount of activity of the feline within the chosen space or area.

The determining means for ascertaining how much exercise is done by the cat is thus able to determine the total distance covered by the cat when chasing the projected image, by way of noting a start position of the cat, following its movement to a first location and to subsequent locations and summing these movements. The processing means compares the actual total distance travelled with a theoretical distance, determined from where an image is shone, and computes from these two an approximate total distance covered in any exercise regime.

Ideally monitoring means is provided to regulate the amount of food that is dispensed within a time period, for example in dependence upon a specific animal (which may have special dietary requirements); or in accordance with one or more other criteria, such as how much exercise has been done, from which a direct calculation of the amount of work done can be obtained. Once this is known an approximate calorific equivalent can be derived, from which a sensible portion of food is obtained so that the animal does not gorge itself.

Likewise if the animal has not chased the image sufficiently far - thereby not performed its minimum amount of exercise; and therefore not had any food during a predetermined time period, an optional failsafe setting provides for dispensation of food, so that a guaranteed minimum amount of food is dispensed.

Animals for which feed is not intended are hereinafter referred to as unauthorised animals.

Preferably a means is included in the apparatus to identify whether an animal is an authorised animal, and this may include a radio frequency identification device (RFID), such as an 'RFID' reader which is adapted to authorise the apparatus to a dispense mode, when an authorised pet or animal is detected in the vicinity of the apparatus. In use the 'RFID' reader identifies an animal and sends a signal to a processor identifying the animal or pet as an authorised animal. The processor is then configured to send an authorisation signal to a timer or other override device, receipt of which opens a storage hopper containing animal feed. The hopper then dispenses a predetermined amount of animal feed to an authorised animal thereby ensuring that feed is not dispensed to any unauthorised animals or interlopers.

Preferably the identification device or devices recognised by the animal identification means include: implanted Radio Frequency Identification Devices (RFID) chips or tags. Typically these RFID chips or RFID tags are located sub-dermally, in the animal's body, for example in the head, neck or shoulder region of the animal.

Other animal identification means may be employed, such as image recognition of the image of the face or iris of an animal or some other device or system that unambiguously identifies the animal or pet for which feed is intended.

Typically RFID chips or 'RFID' tags typically have a short operating range. Ideally therefore the apparatus includes a scanner and an antenna, within a module, cowl, bezel or similar arrangement that is dimensioned and shaped for receiving the head of an animal, so that the antenna is optimally positioned to receive signals from the RFID device.

Optionally a means for repelling undesirable animals is provided. This ideally comprises a device for emitting an unpleasant smell or sound, a sound inaudible to human hearing, a light or strobe or a puff of pressurised fluid (such as air, gas or liquid) that is released when the unauthorised animal approaches the apparatus so as to startle the animal. In an alternative embodiment a small electric shock may be given to the unauthorised animal.

The means for repelling undesirable animals may, for example, trigger when the snout of the unwanted animal is detected close to where food is dispensed or it may be triggered by some other detector, such as for example, a pressure sensor and/or scanner that detects an identification implant from an unauthorised animal.

It is understood that although animals are repelled they are not harmed or injured in any way; merely shocked, startled or coerced so as not to be in a location close to where the permitted animal's food has been dispensed.

Ideally the means for repelling an unauthorised animal comprises: a pressurised fluid outlet which may be arranged to produce a noise as well as puff or jet of air, gas or liquid (such as water), so as to repel a speculative animal from attempting to eat the food of an intended recipient animal.

The preferred animal proximity detector is an RFID detector. Another animal proximity detector may be a motion sensor. An alternative animal proximity detector is a pressure sensor operative to sense the weight of an animal. The animal proximity detector may be used in conjunction with the animal identification means and a microprocessor in order to determine whether the animal that is detected at the feeding apparatus is an 'authorised' animal or not and if the animal is not an authorised animal, the optimum moment to startle it.

It will be understood that the animal identification means in the feeder may be used to determine whether the animal is authorised or not, when for example, an animal with an RFID tag is detected and the identity of the animal is not stored as a permitted animal identity permitted to consume food.

Feed is ideally dispensed into a bowl, which is located within the apparatus. Advantageously the bowl is removable from a support so that it can be cleaned when required.

Ideally the apparatus is triggered or enabled to become active at predetermined times or intervals, for example by way of a programmed timer. The activated state of the apparatus is then conveyed to the animal, for example by an audible and/or visual means. Thus a sound or other alarm may indicate to an authorised animal that it is feeding time. One such alarm may be a signal that is sent via a radio frequency link to, for example, the collar worn by the animal, so that it discreetly vibrates, in a similar way to a pager. In this way only the intended recipient of the animal feed is alerted to the fact that feed is about to be dispensed or an exercise regime is about to commence. The completion of an exercise regime may not always result in automatic dispensation of a meal. For example it may be terminated with dispensation of a treat, rewarding the animal for a 'successful' play regime.

In addition to this alert signal the feeding apparatus may be configured to an active dispensing state, so that when the authorised animal approaches the apparatus in its active state, the presence of the animal is sensed and an amount of food is then delivered from the hopper to a feeding bowl.

Optionally an activator can be provided so that animals can be trained to place the apparatus in an active state, for example when it is hungry and decides when it wants to exercise. Subject to a maximum amount of dispensed food not having been reached and upon completion of a successful exercise regime, the animal is rewarded with a treat. So as to reinforce these activities, a light or sound may be activated, ideally when the animal is detected, so as to engage the animal and stimulate it into interacting with the apparatus.

The processor is capable of operating in a plurality of different modes, thereby enabling the user or pet owner to select a desired food dispensing regime depending upon for example: if the pet owner is going to be away for an extended period (eg a half or full day) - in which case the apparatus is configured to dispense one or two meals. Alternatively the apparatus may be configured to dispense treats, in which case the frequency of dispensation can be set to a maximum of one every hour, two hours or longer.

By activating the apparatus intermittently, and only delivering small amounts of food, a number of objectives are achieved. Feeding little and often mimics the natural feeding habits of many small animals, especially cats. Also little and often feeding can be used to facilitate in the treatment of certain gastrointestinal diseases.

Activating intermittently encourages the pet to visit the apparatus frequently which encourages mobility and weight loss. Also, because smaller amounts of feed can be delivered intermittently; the chances of other animals stealing a large proportion of the authorised animal's daily ration are reduced. Furthermore because feed is not constantly available this discourages neighbouring animals from attempting to steal food.

Optionally different sized modules or cowls may be supplied so as to suit different sized animals.

The apparatus typically, but not exclusively, dispenses quantities of foodstuffs. These are dispensed from the hopper through a channel that may be sealed or opened by an opening means, such as a plunger, for example controlled by way of a motor and worm gear drive, servo device and actuator, an electromagnetic catch or a sprung door. Likewise liquid may be dispensed from the same or a different apparatus under control of a motorised valve from a sealed reservoir.

In one preferred embodiment a food presence sensor is ideally arranged to detect the presence of unconsumed food and upon receipt of a signal from the sensor, indicating unconsumed food, an override signal is sent to the processor which prevents further dispensation of food. The purpose of this is to ensure that food is not available to other 'unauthorised' animals, as well as ensuring that dispensed food is not exposed to the surroundings for too long a period.

The food presence sensor may take the form of an infra red (IR) source projecting a signal which is reflected from a feeding bowl, from which reflected signal an assessment of unconsumed feed may be obtained.

The processor may be configured to monitor the number of occasions and/or total amount of time feed remains unconsumed in the bowl. In the event that these occasions are too frequent an alarm may be triggered indicating a potential problem with the animal. Optionally the alarm may be relayed, for example via a GPS, to the animal owner or carer.

Ideally the animal exercise and feeding apparatus includes an animal identification means which in use scans animal identification implants; and a processor for processing signals derived from an RFID device worn by, or implanted sub-dermally in the animal, and a means for storing, a means for accessing and a means for processing data derived from said RFID device. In this preferred embodiment it will be appreciated that data can be collected, stored and processed relating to the feeding habits of the animal.

Information relating to the number of visits from unauthorised animals may also be obtained and available to be reviewed.

Advantages of the invention are therefore that it may be used to measure physiological parameters of the animal; record and display the physiological parameters and/or animal feeding frequency directly to the owner or on a computer connected by wire or wireless means.

Means may also be provided for altering feeding times and/or feeding quantity/frequency dependent upon the result of physiological parameter measurements. This may be readily achieved in one embodiment by maintaining a hatch from the hopper to the bowl open for a longer or shorter period, thereby allowing more or less food to leave the hopper.

Preferably the apparatus may be programmed as to food quantities and timing. This allows provision of food in pre-selected quantities and at pre-selected timings to pre-selected groups or categories or individual animals. There is hence a user control method linked to, or incorporated on the apparatus. This may consist of a remote control or a control pad or interface on the apparatus, singly or in combination, a 'hard' wire, wireless or GPS connection.

Ideally the apparatus provides an audible or visual stimulus when food has been dispensed for the animal. The audible signal may consist of a recording of the owner's voice. The apparatus may be equipped with a microphone to record sounds or may be compatible with other recording or composing devices. The audio data may be in recordable in .mpeg, .avi or other equivalent digital format.

The apparatus optionally is equipped with a data storage facility. In one embodiment the apparatus may record, provide or compile a catalogue of available feeds that an individual animal has accessed. This may be viewable or printable either on or by the apparatus. Alternatively it is capable of being downloaded to another device.

There is optionally provided on the apparatus means for connecting the apparatus to other devices. This may consist of a Universal Serial Bus (USB) port, Bluetooth (Registered Trade Mark) connector, wireless or wired modem, or other wired or wireless method.

In some embodiments the apparatus may have programmable schedules for more than one animal's feeding. These may also be configured remotely or on the apparatus itself.

Ideally the apparatus provides a repellent stimulus to unauthorised animals attempting to access food. This may consist of visual, audio or physical stimuli. In some embodiments, expressed gas may be utilised as a negative stimulus, alone or in combination with the above. There may be a compressor on the apparatus or alternatively compressed gas canisters or other containers may be used.

In another embodiment a projection device is included which is arranged to project an image to be chased by an authorised animal, within a predetermined space or volume, under control of a random motion device; and a dispenser, which is operative to dispense the feed to an authorised animal upon receipt of a command signal.

Ideally the monitoring means determines the amount of times the projected image is "caught", for example by way of a motion sensor and/or an image detector, and means is provided to determine the efficacy of chasing of the image by the animal or pet, in accordance with a comparison of the position of the image and the position of the animal or pet and issues the command signal to release a reward.

In this further embodiment pets - such as a cat, which are natural predators - are encouraged to engage in games where they chase a projected image. The projected image may be a simple shape or silhouette of an animal, such as a mouse.

The projected image may be from a focussed incoherent source or ideally from a source of coherent light, such as a laser, which is ideally a red laser.

Preferred embodiments of the invention will now be described, by way of example only, and with reference to the Figures in which:

### Brief Description of Figures

Figure 1 shows a diagrammatical cross-section view of the apparatus;
Figure 2 shows a diagrammatical plan view of the apparatus from the front;
Figure 3 shows an overhead view of the apparatus;
Figure 4 is a diagrammatical representation showing the apparatus in use;
Figure 5 shows a diagrammatical cross-section view of an alternative embodiment of the apparatus;
Figure 6 is a block diagram showing key functional elements of control and operation of the embodiment in Figure 5;
Figures 7a and 7b show views of the embodiment shown in Figures 5 and 6, illustrating a cat chasing a projected image and Figure 7c shows the cat being rewarded after a period of exercise; and

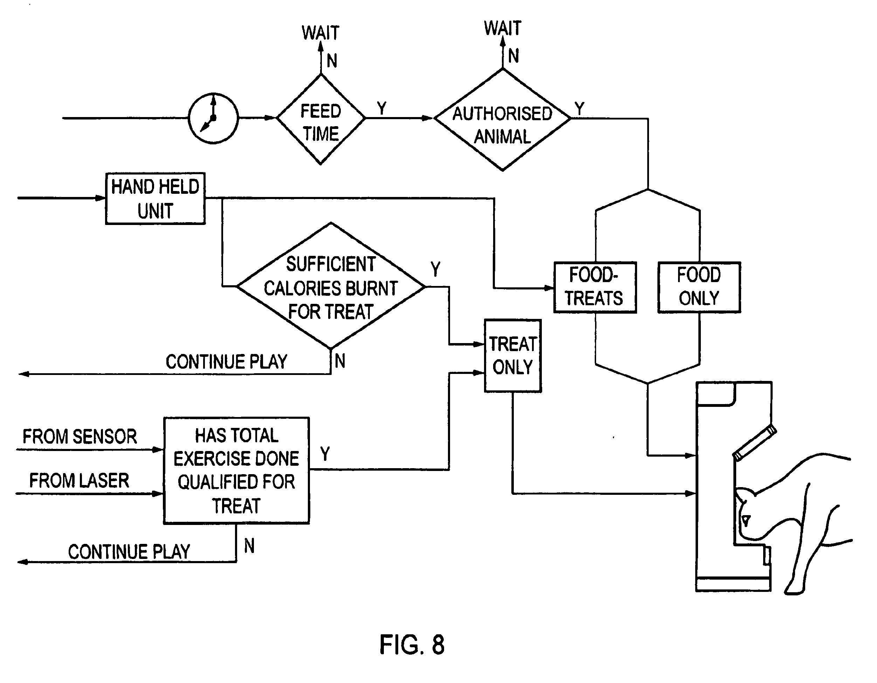

Figure 8 is a block diagram, showing examples of decision criteria and operation modes.

### Detailed Description of Figures

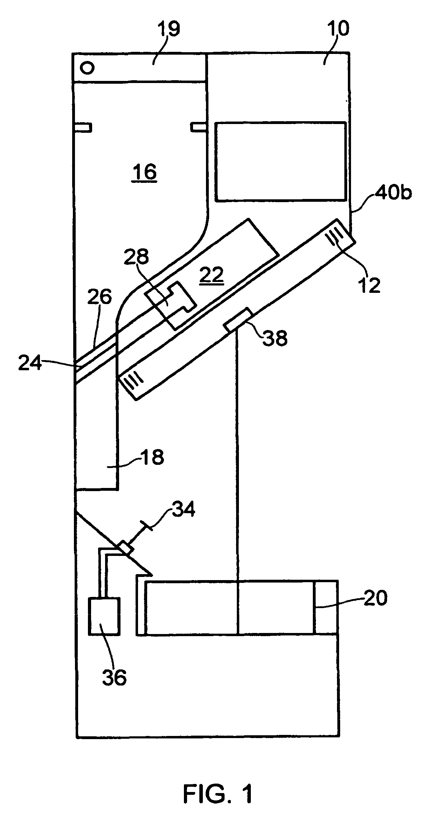

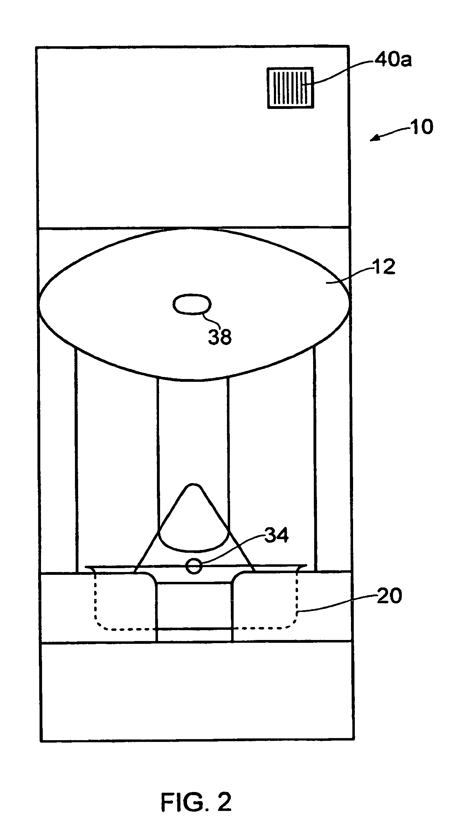

An embodiment of the apparatus 10 is shown, in diagrammatical form, in Figure 1 from the side, with internal elements visible and Figure 2 from the front, which also shows some normally hidden features. The apparatus 10 is ideally a generally triangular shaped segment, which may be a right-angled triangle enabling a perfect fit into a corner, and additionally making the apparatus a discreet, easily locatable unit having minimum interference in a room and permitting it to be used as frequently or infrequently as desired as it may be left outdoors continuously. This has an added benefit in not advertising the absence of the owner. The sides of the apparatus are cut away to enable good side ways vision so that the feeding pet does not feel vulnerable to surprise approaches.

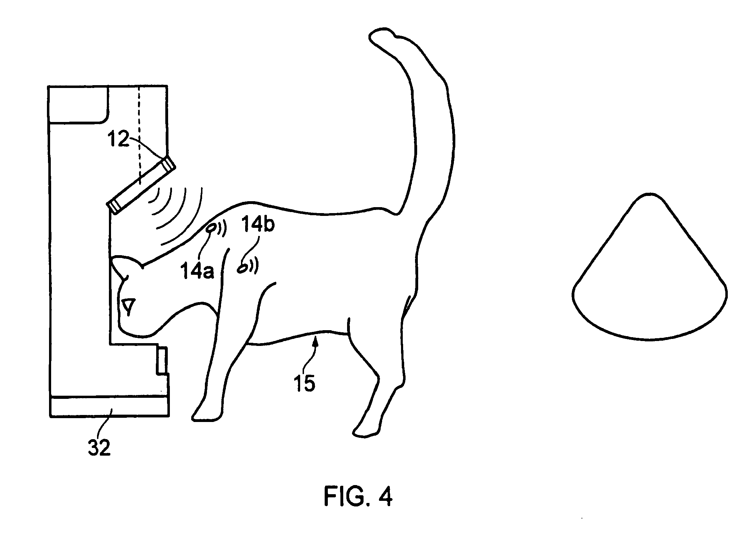

Angled coil of antenna 12 functions to scan Radio Frequency Identification Device (RFID) microchip 14 implanted in a cat 15 (shown in Figure 4). It is envisaged and illustrated that antenna 12 acts as a microchip 14 scanner by defining an angled "walk under" coil. In alternate embodiments the coil may be vertical or horizontal. In yet further embodiments the coil may be arranged in a "walk through" or at least a "poke head through" arrangement to access a bowl.

Typically in the UK, RFID chips are implanted subcutaneously in the cranial or shoulder blades in a dorsal position of a pet, such as a dog or cat. Typically in the EU these are implanted in the left shoulder region. Either of these areas is capable of being scanned by the angled coil antenna 12.

When an authorised animal, such as cat 15, is identified and optionally other criteria are met, eg it is a predetermined 'feeding time', the animal is provided with food (not shown). When these criteria are met food stored in hopper 16, after it has been dispensed via shute 18 into a bowl 20. Bowl may be removable for cleaning.

Food is stored in hopper 16 and released into a bowl 20 via feeding recess 17 and shute 18. Shute 8 is opened and shut with an electro-magnetically operated plunger 22. The hopper 16 and the bowl 20 are designed to be removable from the apparatus for cleaning.

In addition the catch 21 provides an airtight space and the hopper 16 may be a cooled container. In this way food can be left fresh for a number of days, and in summer conditions, when typically a user will want to be out of the house. The hopper 16 consists of one space in the pictured embodiment, but in other embodiments the hopper 16 may be divided into multiple spaces, potentially with different properties.

The size, frequency and timing of feeds can all be varied to suit the individual pet. The embodiment of the apparatus that is shown is designed to contain sufficient food for one pet for one day only. This embodiment of the apparatus is so designed as it may not be in an animal's interest to be left unattended for long periods. However, larger systems with larger hoppers are within the scope of the invention.

The plunger mechanism comprises a rod 24, a stopper 26 and a piston 28. This piston 28 is operated by a microprocessor 30 and opens and closes the shute 18 when food is released.

A power supply (not shown) may include batteries that are ideally located in a base portion 32. Alternatively an external mains electricity supply may be used in conjunction with a transformer.

The apparatus is designed to use a low voltage electrical supply. The battery in the base aids the stabilisation of the device and reduces the risks of it toppling over.

Negative stimuli are provided for animals that are not permitted to access particular feeds. For example in the embodiment shown this includes an expellation device 34 which consists of a compressor or canister of compressed gas 36 to provide a blast of gas to frighten an unauthorised animal away from the apparatus, when detected. Another stimulus shown is a light 38 that may be used either to deter unwanted animals or provide a means of attracting an animal when a feed is ready. This may also be used in combination with a recording of the animal's owner's voice. This recording is facilitated by a combined microphone and loudspeaker 40, as shown in Figure 2.

Alternatively means of downloading externally recorded sounds or clips is provided. This may consist of a Universal Serial Bus (USB) port. Alternatively the apparatus 10 may be equipped with **Bluetooth** (Registered Trade Mark) connectivity. In further alternatives wireless modem connectivity may be provided.

The apparatus 10 may also have the possibility of measuring and recording physiological parameters such a glucose levels in tissue fluids. This information could be used to determine feed size and frequency. Such information could be stored and loaded onto a computer (not shown) for analysis either by wireless or wired means and could be used to determine an amount of feed dispensed.

Figure 2 also shows removable bowl 20 that is placed in the feeding recess 17. If this bowl 20 is used as well as the recess there is the possibility of easy removal and cleaning on return of the user.

As can be also seen in Figure 2 the expellation device 34 is located directly above and in front of the feeding recess 17 and below the coil antenna 12, thereby enabling easy deterrence of unwanted animals, even when food has already distributed. This deterrence is achieved by a puff of air or gas in the face of the animal which has no option but to present its face to a puffer42. The puff of air is then repeated each time the unwanted animal returns. The pressure of this puff may be adjustable with embodiments having a compressor. Alternatively the puff may be an unpleasant smelling gas from an aerosol.

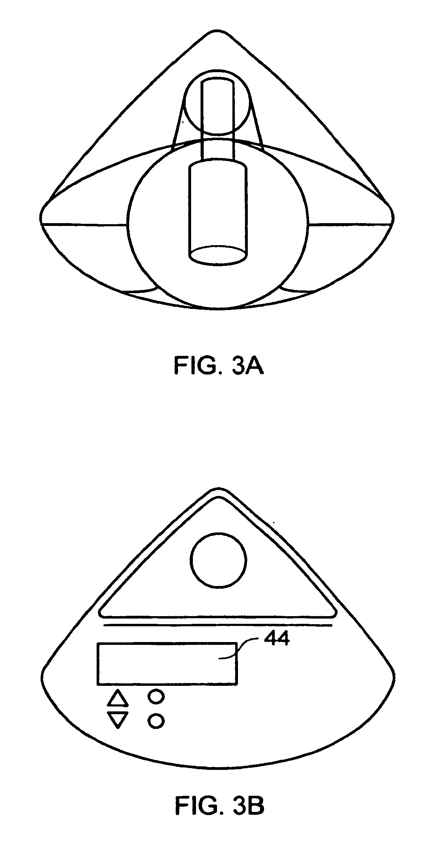

As can be seen from Figure 3 the generally triangular segment shape of the apparatus allows it to be conveniently sited in a corner, further minimising the risk of an animal being ambushed successfully by another animal. Any animal attempting to steal food that has been permitted and/or allocated for another animal will first have to remove the feeding animal from the rear. This creates a necessarily harder task.

The top of the apparatus is equipped with a Liquid Crystal Display (LCD) 44 or similar display interface allowing a user to interface with the apparatus and program meals, animals, frequency, quantities of feed and the like. Different versions of the apparatus may be produced with differing levels of interactivity and programmability. This may depend upon the complexity and sophistication of the microprocessor 30 that is used as well as the software.

In the embodiment pictured the manner of input is shown at control panel 46 having buttons to access menus. Remote controls may be alternatively or additionally provided for users with limited mobility.

Storage hopper 16 is shown with a hinged lid 19, capable of being firmly closed with a catch 21. The hinged lid 19 allows easy access to the hopper 16 for refilling purposes. In addition the lid of the hopper is firmly secured so that it cannot be prised off by pets who are trying to access the full reservoir.

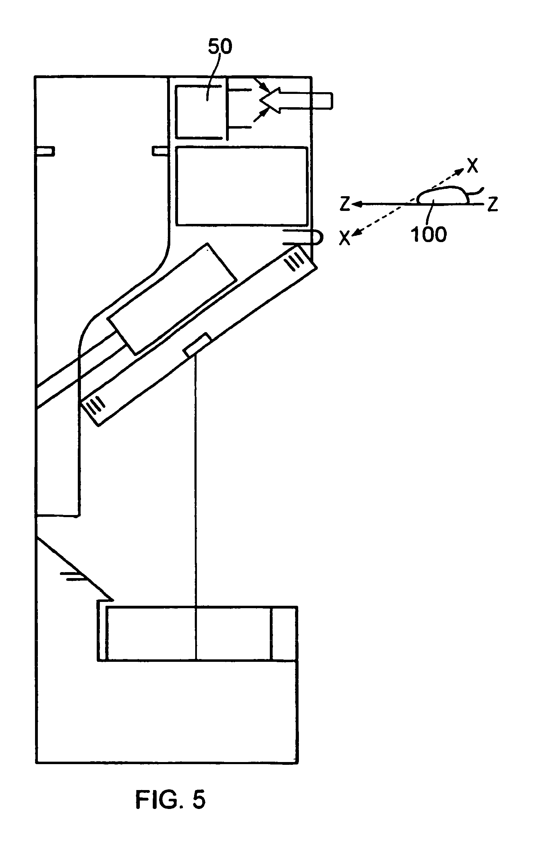

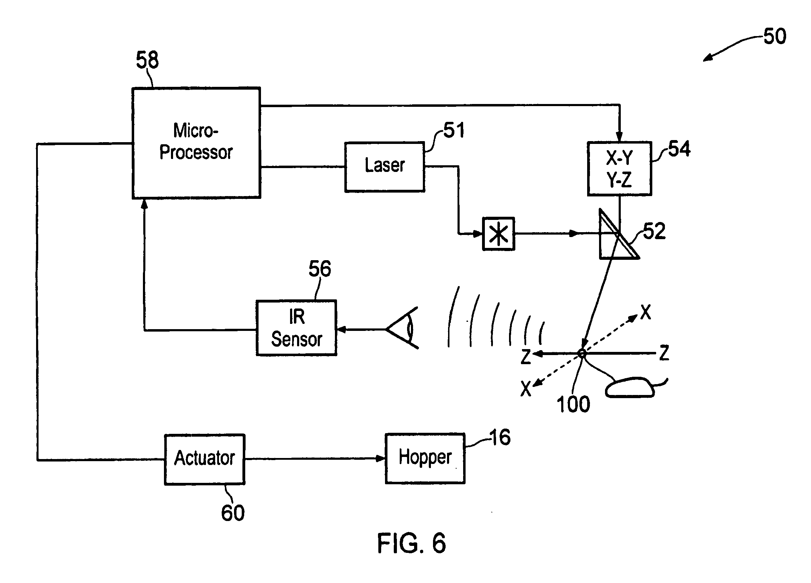

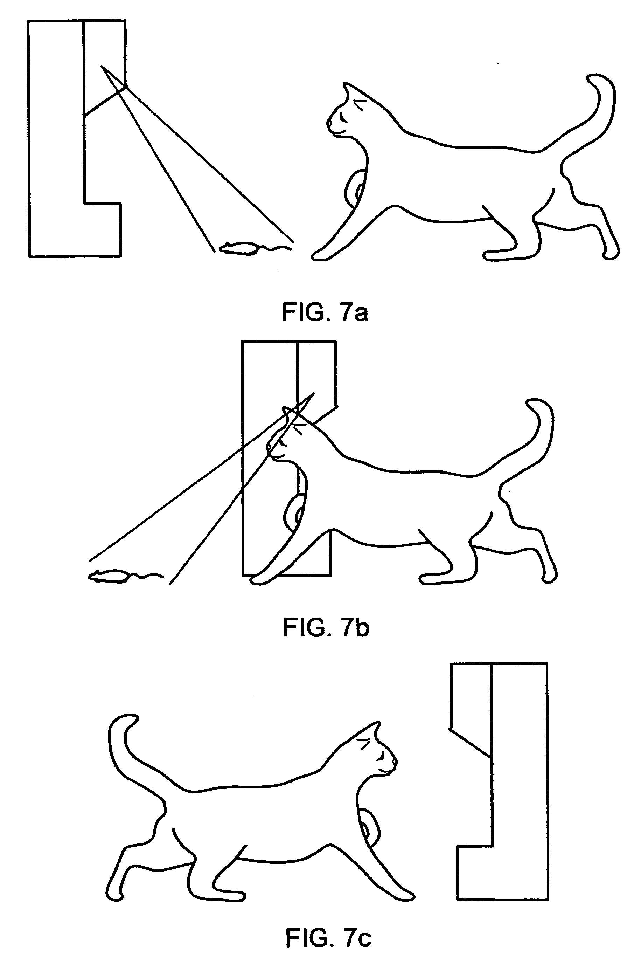

Referring to Figures 5, 6 and 7, a projected light, such as a laser light, for forming an image 100, emerges formed from a laser 51. The image is, for example in the form of a silhouette or spot of light, and is projected randomly by reflection off a prismatic mirror 52. The mirror 52 is ideally operated by way of a servo, galvanic device, piezoelectric actuator 54 or similar device, which is arranged to displace the mirror 52 in two planes X-Z and Y-Z.

As a result light is reflected within a space, whose size may be set before commencement of a "game". For example the laser 51 may be reflected onto a surface of say 1 square metre, 2 square metres or 3 square metres or a larger area. Clearly the larger the area into which the laser 51 can be reflected, the more exercise a cat receives. This exercise is in the form of teasing/encouraging the cat to chase the light spot 100, thereby mimicking the natural desire of a cat to chase prey. This is an ideal way to exercise the cat.

A sensor, such as an infra-red sensor 56, acts as a monitoring means and determines the amount of times the projected image 100 is "caught". This is achieved for example by way of a motion sensor and/or an image detector, and means is provided to determine the efficacy of chasing in accordance with a comparison of the position of the image and the position of the cat and issues the command signal to release a reward.

Alternatively by placing a narrow wavelength light detector on the face or head of the animal, a reflection of the light spot 100 can be detected during a chase sequence. The apparatus may then be programmed to deliver a small food reward by triggering actuator 60 to open the hopper 16. This can be achieved by the micro-processor 58 which is programmed to over ride the pre-programmed feeding frequency/quantities.

The reward encourages the cat to engage in the chase game and therefore engage in exercise to promote weight loss. It encourages the cat to repeatedly engage in its natural hunting instinct because it provides a reward.

In addition to the above an alternative embodiment encourages certain pets - such as cat, which are predators - to engage in games where they chase a projected image. The projected image may be a silhouette of an animal, such as a mouse.

The projected image may be from a focussed incoherent source or a coherent source such as a laser, which is ideally a red laser light.

Variation in the invention may be made to some embodiments by including a compartment for medicine (not shown) which may be refrigerated and have a separate plunger on the exit, to allow separate access to the medicine in order to add it to specified feeds. Likewise liquids may be dispensed from a separate storage vessel.

Other embodiments may feature cameras to record the animals, biometric testing combined with weighing scales which can be accessed via the RFID chip, recordable rewritable memory.

In addition one or more imagers may be included in the apparatus so that for example, the pet owner van be alerted as to when their pet is feeding, either by way of a timed alert signal or an activated camera may be activated when the animal is detected (by way of its RFID tag) so that the animal can be viewed remotely, for example on the owner's mobile telephone, via a '3G' or Internet connection.

It can be seen that the invention has been described by way of examples only and it will be appreciated that variation may be made to the embodiments without departing from the scope of the invention.

It is important that it is realised that although use of the apparatus might enable owners to leave their pet for extended periods, this is not to be encouraged. Generally speaking animal care professionals do not encourage or advise owners to leave their pets for more than 24 continuous hours. Therefore a preferred embodiment of the feeding apparatus is designed only to contain sufficient food for 24 hours.

Optionally a scratch tower may be incorporated with the feeding apparatus.

## Claims

1. An animal exercise and feeding apparatus includes: storage hopper which in use receives feed; a projector arranged to project an image to be chased, under control of a random controller; and a dispenser, which is operative to dispense the feed to an animal upon receipt of a command signal, which is derived from a sensor, that senses the position of the animal relative to the projected image.

2. An animal exercise and feeding apparatus according to claim 1 wherein the projector operates under control of a random controller, which is programmable so that the space or region to where the image is projected is variable.

3. An animal exercise and feeding apparatus according to any preceding claim wherein the motion or activity of the animal is detected by way of a detector, such as a pixellated infra-red (PIR) detector, and a means is provided for determining the amount of activity of the feline within the chosen space or area.

4. An animal exercise and feeding apparatus according to any preceding claim wherein a monitoring means is provided to regulate the amount of food that is dispensed within a time period.

5. An animal exercise and feeding apparatus according to claim 4 wherein the monitoring means provides dispense signal in dependence upon a specific animal or in dependence upon how much exercise has been done by the animal.

6. An animal exercise and feeding apparatus according to any preceding claim includes a failsafe setting that provides for dispensation of food, so that a guaranteed minimum amount of food is dispensed during any predetermined period.

7. An animal exercise and feeding apparatus according to any preceding claim wherein a means is included in the apparatus to identify whether an animal is an authorised animal.

8. An animal exercise and feeding apparatus according to any preceding claim wherein the means includes a radio frequency identification device (RFID), such as a RFID reader.

9. An animal exercise and feeding according to claim 7 or 8 which is adapted to authorise the apparatus to a dispense mode, when an authorised pet or animal is detected in the vicinity of the apparatus.

10. An animal exercise and feeding apparatus according to claim 7, 8 or 9 in which the processor is capable of being configured to send an authorisation signal to a timer or other override device, receipt of which opens a storage hopper containing animal feed.

11. An animal exercise and feeding apparatus according to any preceding claim includes a means for repelling undesirable animals.

12. An animal exercise and feeding apparatus according to claim 11 wherein the means for repelling undesirable animals is from the group comprising: a device for emitting an unpleasant smell; a device for emitting an unpleasant sound; a device for emitting a sound inaudible to human hearing; a light or strobe; a device for emitting a puff of gas or liquid; and a device capable of giving small electric shock to the unauthorised animal.

13. An animal exercise and feeding apparatus according to any preceding claim includes a means for determining the efficacy of chasing in accordance with a comparison of the position of the image and the position of the animal and a means for issuing a command signal to release a treat or reward in dependence upon a specified criteria being met.

14. An animal exercise and feeding apparatus according to any preceding claim wherein the projector is adapted to project an image in the shape of a silhouette of an animal, such as a mouse.

15. An animal exercise and feeding apparatus according to any preceding claim including a source of coherent light, such as a laser.

16. An apparatus according to any preceding claim wherein the apparatus includes a microprocessor which is programmable with information about food quantities and feed timings.

17. An animal exercise and feeding apparatus according to claim 16 include a sensor for sensing the presence of residual feed and which provides a signal to the microprocessor which is programmed to delay dispensing feed, when residual feed is detected.

18. An animal exercise and feeding apparatus according to any preceding claim includes an alarm which alerts an owner that feed has remained unconsumed for a predetermined period.

19. An animal exercise and feeding apparatus according to any preceding claim wherein a remote user control interface is included, enabling a user to program the apparatus remotely.

20. An animal exercise and feeding apparatus according to any preceding claim wherein an imaging means is provided for obtaining an image of the pet.

21. An animal exercise and feeding apparatus according to claim 20 wherein a communication device is provided for permitting the imaging means to be remotely accessible.

22. An animal exercise and feeding apparatus according to any preceding claim where the hopper has a separate compartment for the provision of medicine.

23. An animal exercise and feeding apparatus according to any preceding claim includes a transmitter which sends a signal to a device, for example a collar, to be worn by the animal, the device or collar having a vibrator, which alerts the animal that feed or an exercise regime is about to be dispensed.

24. An animal exercise and feeding apparatus according to any preceding claim includes an actuator, adapted to be actuated by the pet so as to initiate a feed or exercise regime.

## Patentansprüche

1. Tiertrainings- und -fütterungsvorrichtung, die Folgendes beinhaltet: einen Vorratstrichter, der im Gebrauch Futter aufnimmt; einen Projektor, der dazu eingerichtet ist, ein zu jagendes Bild zu projizieren, unter der Steuerung einer Zufallssteuerung; und einen Spender, der dahingehend arbeitet, bei Empfang eines Befehlssignals das Futter an ein Tier abzugeben, wobei das Befehlssignal von einem Sensor stammt, der die Position des Tiers bezüglich des projizierten Bilds erfasst.

2. Tiertrainings- und -fütterungsvorrichtung nach Anspruch 1, wobei der Projektor unter der Steuerung einer Zufallssteuerung arbeitet, der programmierbar ist, so dass der Raum oder das Gebiet, in den bzw. das das Bild projiziert wird, veränderlich ist.

3. Tiertrainings- und -fütterungsvorrichtung nach einem vorhergehenden Anspruch, wobei die Bewegung oder Aktivität des Tiers mithilfe eines Detektors, wie einem pixelweise aufgebauten Infrarotdetektor (PIR), erkannt wird und ein Mittel zur Bestimmung des Aktivitätsumfangs der Katze innerhalb des gewählten Raums oder Bereichs vorgesehen ist.

4. Tiertrainings- und -fütterungsvorrichtung nach einem vorhergehenden Anspruch, wobei ein Überwachungsmittel vorgesehen ist, um die Nahrungsmenge zu regulieren, die innerhalb eines Zeitraums abgegeben wird.

5. Tiertrainings- und -fütterungsvorrichtung nach Anspruch 4, wobei das Überwachungsmittel ein Abgabesignal in Abhängigkeit von einem bestimmten Tier oder in Abhängigkeit davon, wie viel das Tier trainiert hat, bereitstellt.

6. Tiertrainings- und -fütterungsvorrichtung nach einem vorhergehenden Anspruch, die eine Sicherheitseinstellung beinhaltet, die für die Nahrungsabgabe sorgt, so dass eine garantierte Mindestnahrungsmenge während eines vorher festgelegten Zeitraums abgegeben wird.

7. Tiertrainings- und -fütterungsvorrichtung nach einem vorhergehenden Anspruch, wobei ein Mittel zur Identifizierung, ob ein Tier ein berechtigtes Tier ist, in der Vorrichtung enthalten ist.

8. Tiertrainings- und -fütterungsvorrichtung nach einem vorhergehenden Anspruch, wobei das Mittel eine Radiofrequenz-Identifikationsvorrichtung (RFID-Vorrichtung), wie einen RFID-Leser, beinhaltet.

9. Tiertrainings- und -fütterungsvorrichtung nach Anspruch 7 oder 8, die dazu angepasst ist, die Vorrichtung zu einem Abgabemodus zu berechtigen, wenn ein berechtigtes Haustier oder Tier in der Nähe der Vorrichtung erkannt wird.

10. Tiertrainings- und -fütterungsvorrichtung nach Anspruch 7, 8 oder 9, wobei der Prozessor dazu konfiguriert werden kann, ein Berechtigungssignal an einen Zeitgeber oder ein anderes Überbrückungsgerät zu senden, wobei der Empfang des Berechtigungssignals einen Vorratstrichter öffnet, der Tierfutter enthält.

11. Tiertrainings- und -fütterungsvorrichtung nach einem vorhergehenden Anspruch, der ein Mittel zum Zurückweisen unerwünschter Tiere beinhaltet.

12. Tiertrainings- und -fütterungsvorrichtung nach Anspruch 11, wobei das Mittel zum Zurückweisen unerwünschter Tiere aus der Gruppe ist, die Folgendes umfasst: ein Gerät zum Absondern eines unangenehmen Geruchs; ein Gerät zum Abgeben eines unangenehmen Geräuschs; ein Gerät zum Abgeben eines Geräuschs, das für das menschliche Gehör nicht wahrnehmbar ist; ein Licht oder Stroboskop; ein Gerät zum Absondern eines Gasstoßes oder Flüssigkeitsspritzers und ein Gerät, das einen kleinen Stromschlag an das unberechtigte Tier abgeben kann.

13. Tiertrainings- und -fütterungsvorrichtung nach einem vorhergehenden Anspruch, das ein Mittel zur Bestimmung der Wirksamkeit des Jagens entsprechend einem Vergleich der Position des Bilds und der Position des Tiers und ein Mittel zur Ausgabe eines Befehlssignals, um eine Leckerei oder Belohnung in Abhängigkeit von der Erfüllung eines spezifizierten Kriteriums freizugeben, beinhaltet.

14. Tiertrainings- und -fütterungsvorrichtung nach einem vorhergehenden Anspruch, wobei der Projektor dazu angepasst ist, ein Bild in der Form einer Silhouette eines Tiers, wie einer Maus, zu projizieren.

15. Tiertrainings- und -fütterungsvorrichtung nach einem vorhergehenden Anspruch, die eine kohärente Lichtquelle, wie einen Laser, beinhaltet.

16. Vorrichtung nach einem vorhergehenden Anspruch, wobei die Vorrichtung einen Mikroprozessor beinhaltet, der mit Informationen zu Nahrungsmengen und Fütterungszeitvorgaben programmierbar ist.

17. Tiertrainings- und -fütterungsvorrichtung nach Anspruch 16, die einen Sensor zur Erfassung des Vorhandenseins von Restfutter beinhaltet, der ein Signal an den Mikroprozessor liefert, der programmiert wird, die Abgabe von Futter zu verzögern, wenn Restfutter erkannt wird.

18. Tiertrainings- und -fütterungsvorrichtung nach einem vorhergehenden Anspruch, der einen Alarm beinhaltet, der einen Besitzer darauf hinweist, dass Futter für einen vorher festgelegten Zeitraum unverzehrt geblieben ist.

19. Tiertrainings- und -fütterungsvorrichtung nach einem vorhergehenden Anspruch, wobei eine Fernsteuerungsbedienerschnittstelle beinhaltet ist, die einem Benutzer ermöglicht, die Vorrichtung fernzuprogrammieren.

20. Tiertrainings- und -fütterungsvorrichtung nach einem vorhergehenden Anspruch, wobei ein Abbildungsmittel vorgesehen ist, um ein Bild des Tiers zu beziehen.

21. Tiertrainings- und -fütterungsvorrichtung nach Anspruch 20, wobei ein Kommunikationsgerät vorgesehen ist, um zu ermöglichen, dass Fernzugriff auf das Abbildungsmittel möglich ist.

22. Tiertrainings- und -fütterungsvorrichtung nach einem vorhergehenden Anspruch, wobei der Trichter ein separates Fach für die Bereitstellung von Medizin hat.

23. Tiertrainings- und -fütterungsvorrichtung nach einem vorhergehenden Anspruch, die einen Sender beinhaltet, der ein Signal an ein Gerät, beispielsweise ein Halsband, sendet, das von dem Tier getragen werden soll, wobei das Gerät oder Halsband einen Schwingungserzeuger hat, der das Tier darauf hinweist, dass Futter oder ein Trainingsregime abgegeben bzw. ausgegeben werden wird.

24. Tiertrainings- und -fütterungsvorrichtung nach einem vorhergehenden Anspruch, das eine Betätigungseinrichtung beinhaltet, die dazu angepasst ist, von dem Tier betätigt zu werden, um ein Fütterungs- oder Trainingsregime zu starten.

## Revendications

1. Appareil d'exercice et d'alimentation pour animaux comportant : une trémie de stockage qui, en utilisation, reçoit les aliments ; un projecteur agencé de façon à projeter une image destinée à être poursuivie, sous le pilotage d'un contrôleur aléatoire ; et un distributeur, qui fonctionne pour distribuer les aliments à un animal lors de la réception d'un signal de commande, lequel est dérivé d'un capteur qui détecte la position de l'animal par rapport à l'image projetée.

2. Appareil d'exercice et d'alimentation pour animaux selon la revendication 1, le projecteur opérant sous le pilotage d'un contrôleur aléatoire, lequel est programmable de sorte que l'espace ou la région vers lequel l'image est projetée soit variable.

3. Appareil d'exercice et d'alimentation pour animaux selon l'une quelconque des revendications précédentes, le mouvement ou l'activité de l'animal étant détecté grâce à un détecteur, tel un détecteur pixellisé à infrarouge (PIR), et des moyens étant prévus pour déterminer l'importance de l'activité du félin au sein de l'espace ou de la zone choisi.

4. Appareil d'exercice et d'alimentation pour animaux selon l'une quelconque des revendications précédentes, des moyens de monitorage étant prévus pour réguler la quantité de nourriture qui est distribuée dans les limites d'un intervalle de temps.

5. Appareil d'exercice et d'alimentation pour animaux selon la revendication 4, les moyens de monitorage procurant un signal de distribution lequel est subordonné à un animal spécifique ou est subordonné à l'ampleur de l'exercice ayant été effectué par l'animal.

6. Appareil d'exercice et d'alimentation pour animaux selon l'une quelconque des revendications précédentes, englobant un réglage à sécurité intrinsèque qui assure la distribution de nourriture, de sorte qu'une quantité minimum garantie de nourriture soit distribuée pendant n'importe quelle période prédéterminée.

7. Appareil d'exercice et d'alimentation pour animaux selon l'une quelconque des revendications précédentes, des moyens étant inclus dans l'appareil pour identifier si un animal est un animal autorisé ou non.

8. Appareil d'exercice et d'alimentation pour animaux selon l'une quelconque des revendications précédentes, les moyens englobant un dispositif d'identification par radiofréquence (RFID), tel un lecteur RFID.

9. Appareil d'exercice et d'alimentation pour animaux selon la revendication 7 ou 8, qui est conçu pour autoriser l'appareil à être en mode de distribution lorsqu'un animal de compagnie ou un animal autorisé est détecté à proximité de l'appareil.

10. Appareil d'exercice et d'alimentation pour animaux selon la revendication 7, 8 ou 9, dans lequel le processeur est apte à être configuré pour envoyer un signal d'autorisation à une minuterie ou à un autre dispositif de surcommande, signal dont la réception ouvre une trémie de stockage contenant les aliments de l'animal.

11. Appareil d'exercice et d'alimentation pour animaux selon l'une quelconque des revendications précédentes, englobant des moyens pour faire fuir des animaux indésirables.

12. Appareil d'exercice et d'alimentation pour animaux selon la revendication 11, les moyens pour faire fuir des animaux indésirables faisant partie du groupe comprenant : un dispositif pour émettre une odeur déplaisante ; un dispositif pour émettre un son déplaisant ; un dispositif pour émettre un son inaudible à l'ouïe humaine; une lumière ou un effet stroboscopique ; un dispositif pour produire une bouffée de gaz ou émettre du liquide ; et un dispositif apte à donner un faible choc électrique à l'animal non autorisé.

13. Appareil d'exercice et d'alimentation pour animaux selon l'une quelconque des revendications précédentes, englobant des moyens pour déterminer l'efficacité de la poursuite en fonction d'une comparaison entre la position de l'image et la position de l'animal et des moyens pour diffuser un signal de commande destiné à attribuer une gâterie ou une récompense laquelle est subordonnée à la satisfaction de critères spécifiques.

14. Appareil d'exercice et d'alimentation pour animaux selon l'une quelconque des revendications précédentes, le projecteur étant conçu pour projeter une image sous la forme d'une silhouette d'un animal, telle une souris.

15. Appareil d'exercice et d'alimentation pour animaux selon l'une quelconque des revendications précédentes, englobant une source de lumière cohérente, tel un laser.

16. Appareil selon l'une quelconque des revendications précédentes, l'appareil englobant un microprocesseur lequel est programmable avec des informations au sujet des quantités de nourriture et des horaires d'alimentation.

17. Appareil d'exercice et d'alimentation pour animaux selon la revendication 16, englobant un capteur pour détecter la présence d'aliments résiduels et qui fournit un signal au microprocesseur lequel est programmé pour retarder la distribution des aliments quand des aliments résiduels ont été détectés.

18. Appareil d'exercice et d'alimentation pour animaux selon l'une quelconque des revendications précédentes, englobant une alarme laquelle alerte le propriétaire du fait que les aliments n'ont pas été consommés pendant une période prédéterminée.

19. Appareil d'exercice et d'alimentation pour animaux selon l'une quelconque des revendications précédentes, une interface Utilisateur de pilotage à distance étant incorporée, ce qui permet à un utilisateur de programmer l'appareil à distance.

20. Appareil d'exercice et d'alimentation pour animaux selon l'une quelconque des revendications précédentes, des moyens d'imagerie étant prévus pour obtenir une image de l'animal de compagnie.

21. Appareil d'exercice et d'alimentation pour animaux selon la revendication 20, un dispositif de communication étant prévu pour permettre un accès à distance des moyens d'imagerie.

22. Appareil d'exercice et d'alimentation pour animaux selon l'une quelconque des revendications précédentes, la trémie possédant un compartiment séparé pour la mise à disposition de médicaments.

23. Appareil d'exercice et d'alimentation pour animaux selon l'une quelconque des revendications précédentes, englobant un émetteur lequel envoie un signal à un dispositif, par exemple un collier destiné à être porté par l'animal, le dispositif ou collier possédant un vibreur lequel alerte l'animal que la distribution des aliments ou un régime d'exercice va prochainement commencer.

24. Appareil d'exercice et d'alimentation pour animaux selon l'une quelconque des revendications précédentes, englobant un actionneur, lequel est conçu pour être actionné par l'animal de compagnie de sorte à amorcer un régime d'alimentation ou d'exercice.
